# EUROPEAN PATENT APPLICATION

(11) **EP 3 153 819 A1**
(43) Date of publication of application: **12.04.2017**
(21) Application number: 16192312.3
(22) Date of filing: 05.10.2016
(51) Int. Cl.: G01C 21/36, G08G 1/0968

(54) **IN-VEHICLE DEVICE, IN-VEHICLE SYSTEM, AND NOTIFICATION INFORMATION OUTPUT METHOD**

(30) Priority: 09.10.2015 JP 2015201403
(71) Applicant: Clarion Co., Ltd., Saitama 330-0081 (JP)
(72) Inventor: IWATA, Yumi, Saitama-shi, Saitama 330-0081 (JP); MINEGISHI, Yuji, Saitama-shi, Saitama 330-0081 (JP)
(74) Representative: Strehl Schübel-Hopf & Partner

(57) **Abstract**

An in-vehicle device according to the present invention includes a notification information acquisition unit (121) that acquires notification information transmitted from an external device, a traveling state evaluation unit (123) that identifies a traveling state of a vehicle in which the in-vehicle device is mounted and evaluates appropriateness of voice output of the notification information, a guidance interference determination unit (124) that determines interference between a voice output of the notification information and another guidance voice when the traveling state evaluation unit (123) evaluates that the notification information is appropriate for voice output, and a voice output control unit (125) that avoids the interference with the guidance voice and performs voice output of the notification information when there is the interference with the guidance voice.

## Description

### BACKGROUND

### Technical Field

The present invention relates to a technique of an in-vehicle device, an in-vehicle system, and a notification information output method.

### Related Art

Conventionally, Japanese patent laid-open publication No. 2008-20351 A describes a technique of an in-vehicle information device including an Internet connection means that connects to the Internet, a character information acquisition means that acquires character information from the Internet connected by the Internet connection means, a determination means that determines whether or not a predetermined condition is satisfied, and a reading means that reads aloud the character information acquired by the character information acquisition means when the determination means determines that the predetermined condition is satisfied.

### SUMMARY

In the technique as described above, it is possible to read character information as a voice. However while another reading is performed by using another voice such as a guidance voice, outputted voices are overlapped, so that the technique does not necessarily contribute to convenience of a user.

An object of the present invention is to provide a technique that appropriately notifies notification information.

The present invention includes a plurality of means that solve at least a part of the above problem, and an example of the means is as described below. To solve the above problem, an in-vehicle device according to the present invention includes: a notification information acquisition unit that acquires notification information transmitted from an external device; a traveling state evaluation unit that identifies a traveling state of a vehicle in which the in-vehicle device is mounted and evaluates appropriateness of voice output of the notification information; a guidance interference determination unit that determines interference between a voice output of the notification information and another guidance voice when the traveling state evaluation unit evaluates that the notification information is appropriate for voice output; and a voice output control unit that avoids the interference with the guidance voice and performs voice output of the notification information when there is the interference with the guidance voice.

According to the present invention, it is possible to provide a technique that appropriately notifies notification information. Problems, configurations, and effects that are not described above will be clarified by the description of the embodiments below.

### BRIEF DESCRIPTION OF DRAWINGS

FIG. 1 is a diagram showing a structure of an in-vehicle system to which an embodiment according to the present invention is applied;
FIG. 2 is a diagram showing a data structure of a notification information storage unit;
FIG. 3 is a diagram showing a data structure of a notification start condition storage unit;
FIG. 4 is a diagram showing a data structure of a trial limit setting storage unit;
FIG. 5 is a diagram showing a data structure of a guidance information storage unit;
FIG. 6 is a diagram showing a hardware structure of an in-vehicle device;
FIG. 7 is a diagram showing a hardware structure of a navigation device;
FIG. 8 is a diagram showing a flow of notification information output processing;
FIG. 9 is a diagram showing a flow of traveling state appropriateness determination processing;
FIG. 10 is a diagram showing a flow of voice output interruption processing;
FIG. 11 is a diagram showing an example of a minimum display output screen;
FIG. 12 is a diagram showing another example of the minimum display output screen; and
FIG. 13 is a diagram showing a data structure of a traveling road dependent output appropriateness storage unit.

### DETAILED DESCRIPTION

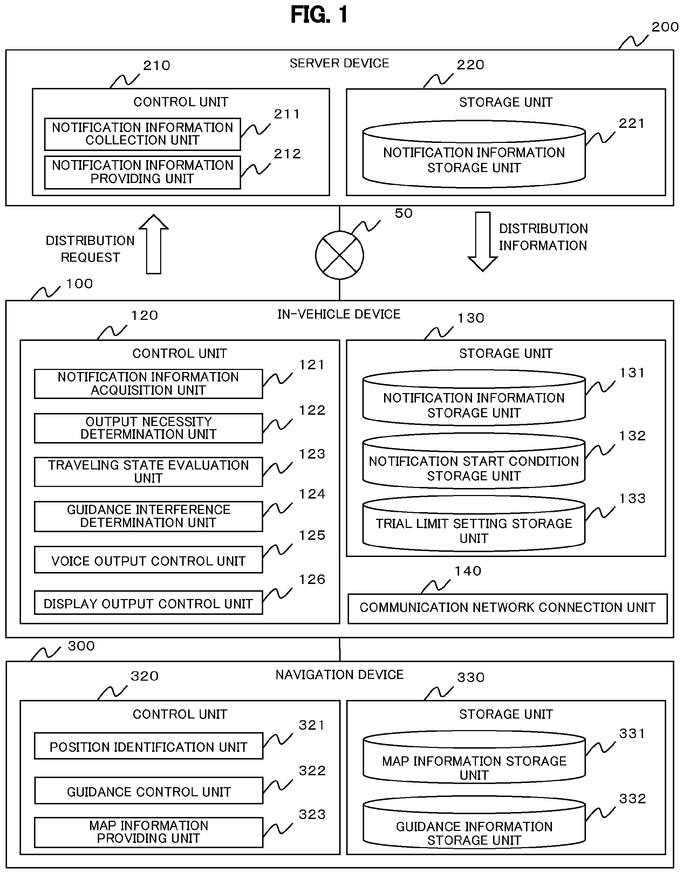

Hereinafter, an in-vehicle system to which an embodiment according to the present invention is applied will be described with reference to the drawings. FIGS. 1 to 13 do not show the entire configuration of the in-vehicle system, but depict the configuration by appropriately omitting a part of the configuration for ease of understanding.

FIG. 1 shows a structure of the in-vehicle system to which the embodiment according to the present invention is applied. In the in-vehicle system to which the embodiment according to the present invention is applied, an in-vehicle device 100 and a server device 200 are communicably connected through a network 50. It is desirable that the network 50 is, for example, a public wireless communication network such as an Internet network and a mobile phone network. However, the network 50 may be a closed communication network provided for each predetermined management area. More specifically, the network 50 is a communication network of various communication methods such as the Internet, a Local Area Network (LAN), a Wide Area Network (WAN), a wireless network such as WiFi (registered trademark), and a short-distance wireless communication such as Bluetooth (registered trademark).

The in-vehicle device 100 is an information processing device which is mounted in a vehicle and which can perform predetermined communication with another device mounted in the vehicle. In the present embodiment, the in-vehicle device 100 can communicate with a navigation device that can acquire present location information, route information, and the like. However, the in-vehicle device 100 of the present invention is not limited to the in-vehicle device 100 shown in FIG. 1. For example, the in-vehicle device 100 may be various control devices included in a moving body. Further, the in-vehicle device 100 may be a device that can be detachably provided to a vehicle. Alternatively, the in-vehicle device 100 may be a mobile terminal such as a mobile phone device held by a driver or a passenger of a vehicle, and for example, the in-vehicle device 100 may be a smartphone, a feature phone, a Personal Digital Assistance (PDA), a notebook-sized personal computer, a tablet terminal, and the like.

The in-vehicle device 100 includes a control unit 120, a storage unit 130, and a communication network connection unit 140. The control unit 120 includes a notification information acquisition unit 121, an output necessity determination unit 122, a traveling state evaluation unit 123, a guidance interference determination unit 124, a voice output control unit 125, and a display output control unit 126. The storage unit 130 includes a notification information storage unit 131, a notification start condition storage unit 132, and a trial limit setting storage unit 133.

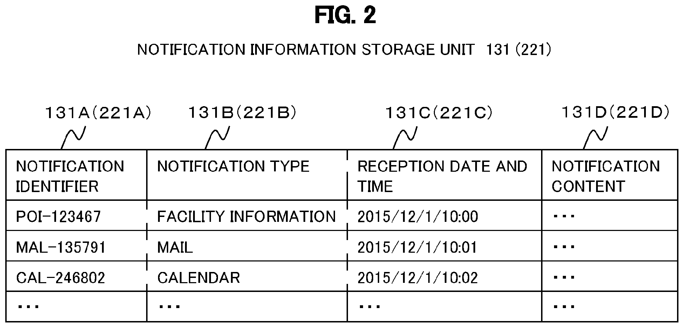

FIG. 2 is a diagram showing a data structure of the notification information storage unit 131. A notification information storage unit 221 of the server device 200 described later also has the same data structure.

The notification information storage unit 131 includes a notification identifier 131 A, a notification type 131 B, a reception date and time 131C, and a notification content 131 D. The notification identifier 131 A is an identifier included in notification information. The notification type 131 B is information that specifies a type of the notification information. The reception date and time 131C is information that specifies a date and time when the notification information is received from an external device. The notification content 131 D is information that indicates a content of the notification information.

The notification information storage unit 221 of the server device 200 described later includes a notification identifier 221 A, a notification type 221 B, a reception date and time 221C, and a notification content 221 D, which are information pieces respectively corresponding to the notification identifier 131 A, the notification type 131 B, the reception date and time 131C, and the notification content 131 D.

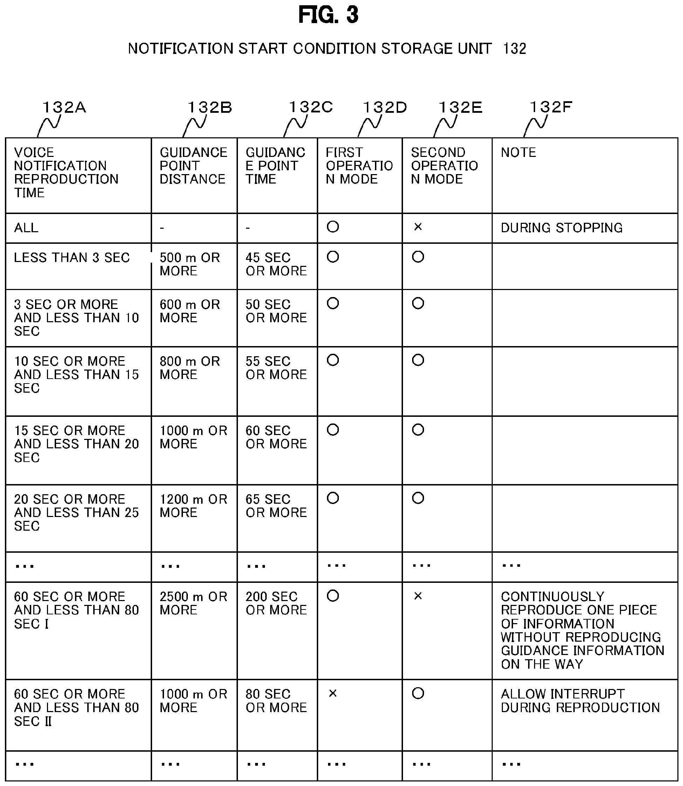

FIG. 3 is a diagram showing a data structure of the notification start condition storage unit 132. The notification start condition storage unit 132 includes a voice notification reproduction time 132A, a guidance point distance 132B, a guidance point time 132C, a first operation mode 132D, a second operation mode 132E, and a note 132F.

The voice notification reproduction time 132A is information where the time related to voice reproduction of notification information to be reproduced is segmented for each predetermined range. The guidance point distance 132B is information that specifies a required amount of distance from a spot to which route guidance is performed, that is, a guidance point, to a present location when the notification information is reproduced by voice. For example, when information of "500 m or more" is stored in the guidance point distance 132B, the guidance point distance 132B is used to determine that the notification information is not outputted by voice when the distance from the guidance point to the present location is not greater than or equal to 500 m. The guidance point time 132C is information that specifies an expected required amount of time from a spot to which route guidance is performed, that is, a guidance point, to a present location when the notification information is reproduced by voice. For example, when information of "45 seconds or more" is stored in the guidance point time 132C, the guidance point time 132C is used to determine that the notification information is not outputted by voice when an expected time required to move from the guidance point to the present location is not greater than or equal to 45 seconds.

The first operation mode 132D and the second operation mode 132E are respectively setting values corresponding to modes related to notification information reproduction of the in-vehicle device 100. Specifically, when the in-vehicle device 100 operates in the first operation mode, settings indicated by a circle mark (information that means "to be used") in the first operation mode 132D are used as effective settings and information stored in the second operation mode 132E is not used as an effective setting. Similarly, when the in-vehicle device 100 operates in the second operation mode, settings indicated by a circle mark in the second operation mode 132E are used as effective settings and information stored in the first operation mode 132D is not used as an effective setting.

The note 132F is information required when a special condition setting is performed. For example, setting information such as whether or not to allow a special interrupt operation is stored in the note 132F.

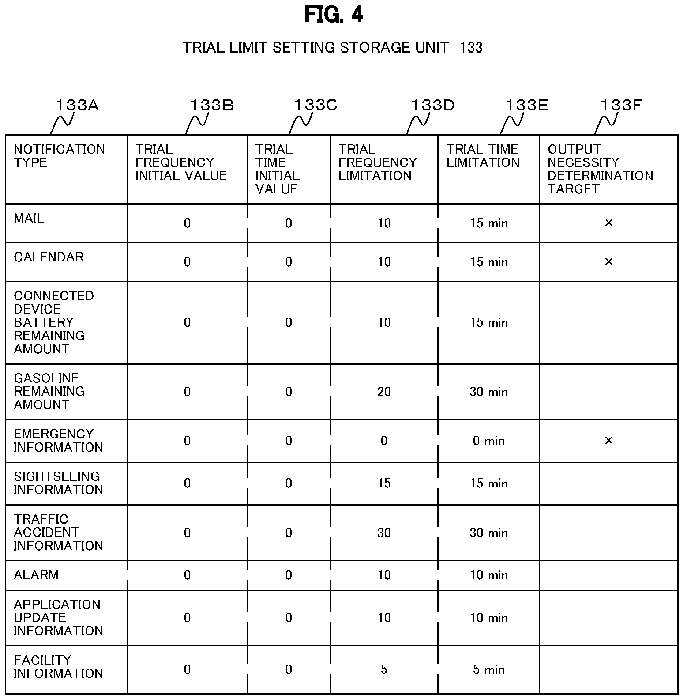

FIG. 4 is a diagram showing a data structure of the trial limit setting storage unit 133. The trial limit setting storage unit 133 includes a notification type 133A, a trial frequency initial value 133B, a trial time initial value 133C, a trial frequency limitation 133D, a trial time limitation 133E, and an output necessity determination target 133F.

The notification type 133A is information that specifies a type of the notification information. The trial frequency initial value 133B is information that specifies an initial value of a trial frequency which is the number of times when the notification information is tried to be outputted by voice. The trial time initial value 133C is information that specifies an initial value of a trial time which is a time elapsed from when the notification information is started to be tried to be outputted by voice. The trial frequency limitation 133D is information that specifies a limited number of times of the trial frequency which is the number of times when the notification information is tried to be outputted by voice. The trial time limitation 133E is information that specifies a limited time of the trial time which is a time elapsed from when the notification information is started to be tried to be outputted by voice.

The output necessity determination target 133F is information that specifies whether or not the notification type is a target of output necessity determination processing in notification information output processing described later. Specifically, when the notification type is a notification type that becomes meaningless due to existence of other notification information, the notification type is excluded from the target of the output necessity determination processing.

The notification information acquisition unit 121 acquires notification information transmitted from an external device. The notification information acquisition unit 121 stores acquired notification information into the notification information storage unit 131 in an acquisition order. It is desirable that the notification information includes a notification identifier, a notification type, and a notification content. However, when the notification information does not include the notification identifier and/or the notification type, the notification information acquisition unit 121 may generate the notification identifier and/or the notification type by using a predetermined algorism.

The output necessity determination unit 122 determines necessity of output of the notification information depending on whether or not the type of the notification information indicates that notification is meaningless because of existence of other notification information. When the traveling state evaluation unit 123 evaluates that the notification information is not appropriate for voice output, the output necessity determination unit 122 determines that output is not necessary when a trial limitation, which is a limitation of the time or the number of times that are predetermined for each type of the notification information, is reached.

The traveling state evaluation unit 123 identifies a traveling state of a vehicle in which the in-vehicle device 100 is mounted and evaluates appropriateness of voice output of the notification information. Specifically, the traveling state evaluation unit 123 determines that the notification information is appropriate for voice output when a notification start condition that is predetermined according to the length of voice output of the notification information is satisfied. The notification start condition is that there is an allowance of distance and time from the present location to a nearest guidance point on a recommended route. Further, when there is no setting of recommended route, the traveling state evaluation unit 123 determines the notification start condition by setting a temporary recommended route and using a guidance point on the temporary recommended route.

When the traveling state evaluation unit 123 determines that the notification information is appropriate for voice output, the guidance interference determination unit 124 determines interference between a voice output of the notification information and another guidance voice. The interference means that a period in which the notification information is being outputted by voice overlaps with a period in which another guidance voice is being reproduced. Specifically, the guidance interference determination unit 124 detects existence of a voice related to another guidance in a voice output.

The voice output control unit 125 receives information, which will be outputted by voice, such as the notification information as an expression in a predetermined language such as a text format and outputs the information as a voice. That is to say, the voice output control unit 125 has a function corresponding to so-called Text To Speech (TTS). However, when the guidance interference determination unit 124 determines that there is interference with a guidance voice, the voice output control unit 125 avoids the interference and performs voice output of the notification information. Various methods can be considered as a method of avoiding the interference. For example, a method in which an output is performed after detecting the end of output of a voice that has been outputted and a method in which an output is performed after waiting a predetermined time (for example, ten seconds) can be considered.

The display output control unit 126 identifies a spot on a map regarding a position indicating the present location at the time when the notification information is acquired and displays a predetermined icon indicating acquisition of the notification information. However, it is not limited to this, and when the display output control unit 126 acquires the notification information, the display output control unit 126 may notify that there is the notification information by displaying a predetermined icon according to a type of the notification information at a predetermined position on a screen.

The communication network connection unit 140 performs communication with the server device 200 that is another device connected to the network 50.

The server device 200 is an information processing device including a control unit 210 and a storage unit 220. The server device 200 provides distribution information according to a distribution request of the notification information from the in-vehicle device 100.

The storage unit 220 of the server device 200 includes the notification information storage unit 221. The notification information storage unit 221 has basically the same data structure as that of the notification information storage unit 131 of the in-vehicle device 100 for each in-vehicle device or for each destination of the notification.

The control unit 210 of the server device 200 includes a notification information collection unit 211 and a notification information providing unit 212.

The notification information collection unit 211 acquires the notification information from a predetermined external device, for example, predetermined various information providing sites such as a providing site of Web mail, a providing site of e-mail box, a providing site of calendar information, a providing site of facility information, map information, and news, and a providing site of traffic jam information. Regarding an acquisition cycle of the notification information, it is desirable that a predetermined cycle such as, for example, as needed, every one minute, and twice a day is predetermined for each providing site. This is because it is considered that there is an optimal acquisition cycle according to a type of information, for example, an e-mail is required to be notified as soon as possible from when the e-mail is received. The notification information collection unit 211 stores the collected notification information into the notification information storage unit 221 according to a notification destination of the collected notification information. Generally, the notification information is transmitted by a method called a push type method and the server device 200 receives the notification information and the notification information collection unit 211 processes the notification information. However, it is not limited to this, and the notification information may be transmitted by various methods.

The notification information providing unit 212 extracts and distributes information which is stored into the notification information storage unit 221 by the notification information collection unit 211 to a request source according to a distribution request. The distribution request includes information of the in-vehicle device 100 that is the request source and a destination (for example, an e-mail address and a user ID) of the notification information requested to be distributed. The notification information providing unit 212 performs the distribution by extracting information including the destination included in the distribution request from the notification information storage unit 221 and transmitting the information to the request source.

A navigation device 300 is an information processing device including a control unit 320 and a storage unit 330. The navigation device 300 provides map information, position information indicating a present location, information of a recommended route, and information of a distance between the present location and a predetermined position on the map and a time required to move the distance, according to a request from the in-vehicle device 100. Further, the navigation device 300 transfers voice information and display information, which will be outputted, to the in-vehicle device 100 and causes the in-vehicle device 100 to output the voice information and the display information.

The control unit 320 includes a position identification unit 321, a guidance control unit 322, and a map information providing unit 323. The storage unit 330 includes a map information storage unit 331 and a guidance information storage unit 332.

The position identification unit 321 identifies position information indicating the present location of the navigation device 300. The position identification unit 321 transfers the identified position information to the in-vehicle device 100.

The guidance control unit 322 performs guidance so that the present location does not deviate from the recommended route. Specifically, the guidance control unit 322 outputs a voice guidance and a display guidance of a direction to run and a lane change at an intersection or a branch so that the present location does not deviate from the recommended route that has been set. Even when there is no setting of recommended route, the guidance control unit 322 sets a temporary recommended route related to a predetermined nearby range according to a running direction from the present location. Then, the guidance control unit 322 outputs a voice guidance and a display guidance of a direction to run and a lane change according to the temporary recommended route. Regarding setting of the temporary recommended route, various methods can be considered. However, for example, there is a method of identifying a road to travel often based on a traveling history for each predetermined direction and setting a route of the road to travel as the temporary recommended route.

The map information providing unit 323 provides map information according to a request. Specifically, the map information providing unit 323 forms a map image by using link information read from the map information storage unit 331. Further, the map information providing unit 323 forms a map image in a predetermined range close to the present location and superimposes icon information of a marker indicating the present location and facilities on the map image.

The map information storage unit 331 and the guidance information storage unit 332 are stored in the storage unit 330. The map information storage unit 331 is so-called map information, which includes information specifying topography and node information specifying links indicating roads and a connection relation of the links. However, it is not limited to this, and the map information storage unit 331 may be information of another format if the map information storage unit 331 includes information of topography and roads.

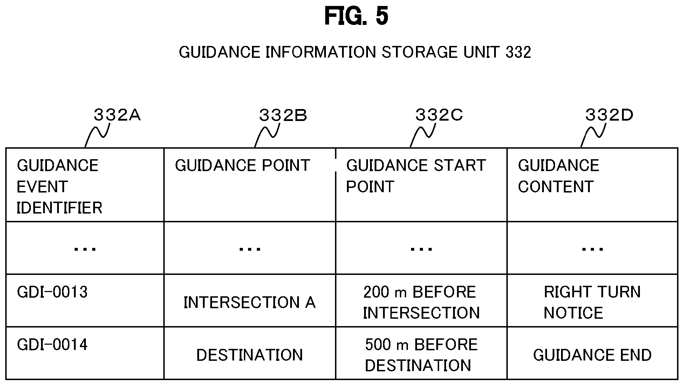

FIG. 5 is a diagram showing a data structure of the guidance information storage unit 332. The guidance information storage unit 332 includes a guidance event identifier 332A, a guidance point 332B, a guidance start point 332C, and a guidance content 332D.

The guidance event identifier 332A is information that specifies one unit where guidance is performed. When a recommended route is set, it is desirable that a guidance event identifier is assigned in the order of passing through predetermined guidance points on the recommended route. Even when no recommended route is set, it is desirable that a guidance event identifier is assigned in the order of passing through predetermined guidance points on a temporary recommended route.

The guidance point 332B is information that specifies a position or a facility toward which the guidance is performed. For example, the guidance point 332B is position information of an "intersection A" or information that specifies a facility of a "destination".

The guidance start point 332C is information that specifies a position where the guidance is started. For example, the guidance start point 332C is information that specifies a position 200 m before the "intersection A" or a position 500 m before the "destination".

The guidance content 332D is information that specifies content of the guidance. For example, the guidance content 332D is information that specifies output content of a display image and a voice file that are predetermined as a right turn notice or a guidance end notice.

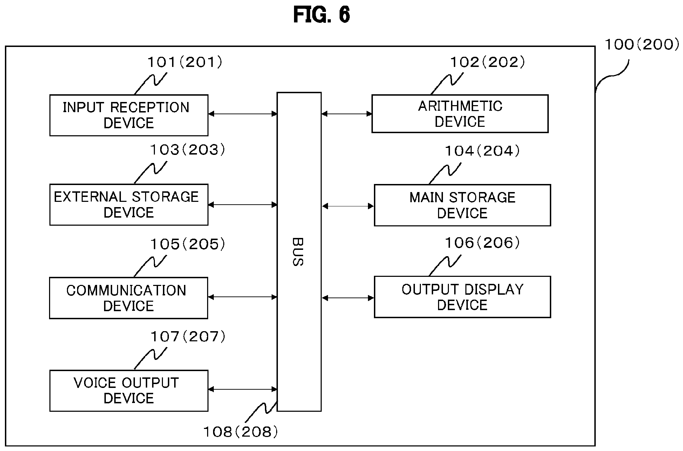

FIG. 6 is a diagram showing a hardware structure of the in-vehicle device 100. The in-vehicle device 100 includes an input reception device 101, an arithmetic device 102, an external storage device 103, a main storage device 104, a communication device 105, an output display device 106, a voice output device 107, and a bus 108 that connects these devices.

The input reception device 101 is various input devices such as a keyboard, a mouse, and a touch panel. The input reception device 101 and the output display device 106 may be shared with an input/output path of the navigation device 300 or may be independent from the input/output path.

The arithmetic device 102 is, for example, an arithmetic device of a Central Processing Unit (CPU).

The external storage device 103 is a non-volatile storage device such as a hard disk (Hard Disk Drive), an Solid State Drive (SSD), or a flash memory, which can store digital information.

The main storage device 104 is a memory device such as, for example, a Random Access Memory (RAM).

The communication device 105 is a device such as a network card that establishes a communication path with another device such as, for example, the server device 200 through the network 50 or the like and transmits and receives information.

The output display device 106 is a display device such as, for example, a liquid crystal display and an organic Electro Luminescence (EL) display.

The voice output device 107 is a device, which generates a specified sound, such as, for example, a speaker and a head set.

Each functional unit of the control unit 120 described above, that is, the notification information acquisition unit 121, the output necessity determination unit 122, the traveling state evaluation unit 123, the guidance interference determination unit 124, the voice output control unit 125, and the display output control unit 126 are formed when the arithmetic device 102 reads and executes a predetermined program. Therefore, the main storage device 104 or the external storage device 103 stores a program for realizing processing of each functional unit.

Each component described above is classified according to major processing content for ease of understanding of the configuration of the in-vehicle device 100. Therefore, the present invention is not limited by the manner of classification of the components or the names of the components. The components of the in-vehicle device 100 can be classified into a greater number of components according to processing content. It is possible to classify the components so that one component performs a greater number of processing operations.

Each functional unit may be formed not only by a CPU but also by hardware (ASIC, GPU, or the like). Further, processing of each functional unit may be performed by one hardware unit or may be performed by a plurality of hardware units.

The server device 200 has substantially the same hardware configuration as that of the in-vehicle device 100 except for a part of the configuration, so that the hardware configuration of the server device 200 is not shown in the drawings. The server device 200 includes an input reception device 201, an arithmetic device 202, an external storage device 203, a main storage device 204, a communication device 205, an output display device 206, a voice output device 207, and a bus 208 that connects these devices. However, the server device 200 need not necessarily have to include the input reception device 201, the output display device 206, and the voice output device 207.

Each functional unit of the control unit 210 described above, that is, the notification information collection unit 211 and the notification information providing unit 212 are formed when the arithmetic device 202 reads and executes a predetermined program. Therefore, the main storage device 204 or the external storage device 203 stores a program for realizing processing of each functional unit.

Each component described above is classified according to major processing content for ease of understanding of the configuration of the server device 200. Therefore, the present invention is not limited by the manner of classification of the components or the names of the components. The components of the server device 200 can be classified into a greater number of components according to processing content. It is possible to classify the components so that one component performs a greater number of processing operations.

Each functional unit may be formed not only by a CPU but also by hardware (ASIC, GPU, or the like). Further, processing of each functional unit may be performed by one hardware unit or may be performed by a plurality of hardware units.

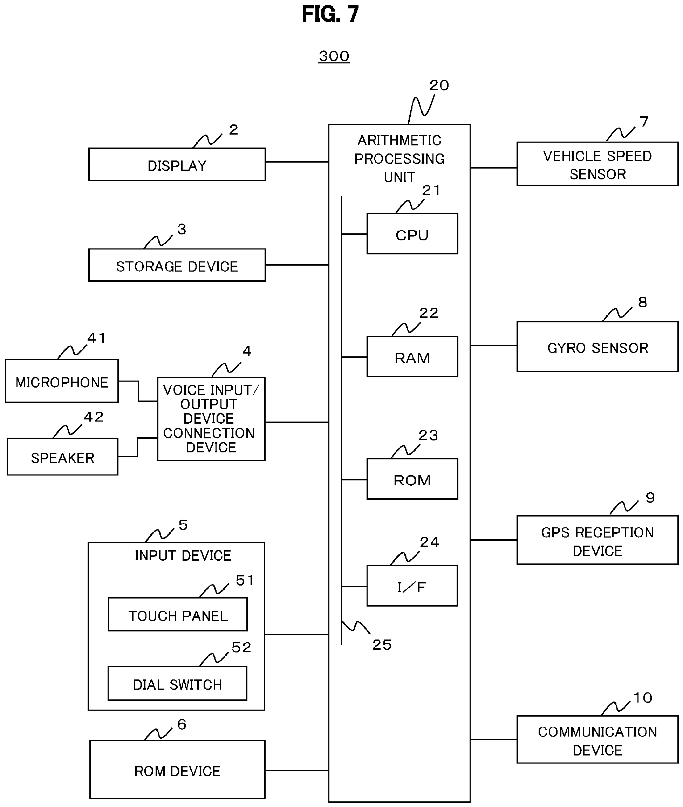

FIG. 7 is a diagram showing a hardware structure of the navigation device 300. The navigation device 300 includes an arithmetic processing unit 20, a display 2, a storage device 3, a voice input/output device connection device 4 (including a microphone 41 as a voice input device and a speaker 42 as a voice output device), an input device 5 (including a touch panel 51 as a contact input device and a dial switch 52), a Read Only Memory (ROM) device 6, a vehicle speed sensor 7, a gyro sensor 8, a Global Positioning System (GPS) reception device 9, and a communication device 10. The display 2 and the voice input/output device connection device 4 may be shared with the output display device 106, the voice output device 107, and the input reception device 101 of the in-vehicle device 100, or all or part of the display 2 and the voice input/output device connection device 4 may be independently provided.

The arithmetic processing unit 20 is a central unit that performs various processing. For example, the arithmetic processing unit 20 calculates a present location based on information outputted from the sensors 7 and 8, the GPS reception device 9, the communication device 10, and the like. Further, the arithmetic processing unit 20 reads map data required to perform display from the storage device 3 or the ROM device 6 based on obtained information of the present location.

Further, the arithmetic processing unit 20 graphically lays out the read map data, superimposes a mark representing the present location on the map data, and displays the superimposed data on the display 2. Further, the arithmetic processing unit 20 searches for a recommended route which is an optimal route connecting the present location or a departure place indicated by a user with a destination (or a passing spot or a stop-off point) by using the map data and the like stored in the storage device 3 or the ROM device 6. Further, the arithmetic processing unit 20 guides a user by using the speaker 42 and the display 2. Further, the arithmetic processing unit 20 performs processing performed by each functional unit of the control unit 320 of the navigation device 300, that is, each of the position identification unit 321, the guidance control unit 322, and the map information providing unit 323.

The arithmetic processing unit 20 of the navigation device 300 has a configuration in which devices are connected by a bus 25. The arithmetic processing unit 20 has a CPU 21 that performs various processing such as performing numerical processing and controlling each device, a RAM 22 that stores map data read from the storage device 3, arithmetic data, and the like, a ROM 23 that stores a program and data, and an I/F (interface) 24 for connecting various hardware devices with the arithmetic processing unit 20.

The display 2 is a unit that displays graphics information generated by the arithmetic processing unit 20 and the like. The display 2 is formed of various display devices such as a liquid crystal display and an organic EL display.

The storage device 3 is formed of a storage medium, which is at least readable and writable, such as an HDD, an SSD, and a non-volatile memory card.

The storage medium stores the aforementioned map information storage unit 331 which is map data (including link data of links that form a road on the map) necessary for a normal route search device and the guidance information storage unit 332.

The voice input/output device connection device 4 is connected to the microphone 41 used as a voice input device and the speaker 42 used as a voice output device and causes the microphone 41 and the speaker 42 to be usable. The microphone 41 acquires a voice outside the navigation device 300, such as a voice uttered by a user or another passenger and an outside sound collected at a predetermined position in the vehicle.

The speaker 42 outputs a message or a guidance voice generated by the arithmetic processing unit 20 to a user as a voice. The microphone 41 and the speaker 42 are arranged separately at predetermined positions in the vehicle. However, the microphone 41 and the speaker 42 may be housed in one housing. The navigation device 300 can include a plurality of microphones 41 and a plurality of speakers 42.

The input device 5 is a device that receives an instruction from a user through an operation by the hands of the user. The input device 5 includes the touch panel 51, the dial switch 52, and the other hardware switches (not shown in the drawings) which are a scroll key, a scale change key, and the like. The input device 5 further includes a remote controller that can remotely issue an operation instruction to the navigation device 300. The remote controller includes a dial switch, a scroll key, a scale change key, and the like and can transmit information indicating that each key or switch is operated to the navigation device 300.

The touch panel 51 is mounted over a display surface of the display 2 and it is possible to see the display screen through the touch panel 51. The touch panel 51 identifies a touched position corresponding to XY coordinates of an image displayed on the display 2, converts the touched position into coordinates, and outputs the coordinates. The touch panel 51 is formed of a pressure sensitive type or electrostatic type input detection element or the like. The touch panel 51 may be a touch panel that can realize multi-touch where it is possible to detect a plurality of touched positions at the same time.

The dial switch 52 is formed to be able to rotate clockwise and counterclockwise. The dial switch 52 generates a pulse signal for each rotation of a predetermined angle and outputs the pulse signal to the arithmetic processing unit 20. The arithmetic processing unit 20 obtains a rotation angle from the number of the pulse signals.

The ROM device 6 is formed of a storage medium, which is at least readable, such as a ROM including a CD-ROM and a DVD-ROM and an Integrated Circuit (IC) card. The storage medium stores, for example, moving image data, voice data, and the like.

The vehicle speed sensor 7, the gyro sensor 8, and the GPS reception device 9 are used to detect the present location (for example, the position of the vehicle) by the navigation device 300. The vehicle speed sensor 7 is a sensor that outputs a value to be used to calculate the vehicle speed. The gyro sensor 8 is formed of an optical fiber gyro, a vibration gyro, or the like. The gyro sensor 8 detects an angular velocity of rotation of a moving body. The vehicle speed sensor 7 and the gyro sensor 8 may be realized by an acceleration sensor. The GPS reception device 9 measures the present location, a running speed, and a running direction of the moving body by receiving signals from GPS satellites and measuring a distance between the moving body and a GPS satellite and a change rate of the distance for three or more satellites.

The communication device 10 starts, continues, and ends communication with an access control device that can communicate with the in-vehicle device 100. For example, the communication device 10 connects to the access control device by a wireless network such as WiFi (registered trademark), a short-distance wireless communication such as Bluetooth (registered trademark) and Near Field Communication (NFC), and various communication methods such as Controller Area Network (CAN). The communication device 10 tries to detect and connect to an access control device regularly or at a predetermined timing and establishes communication with a connectable access control device.

Each functional unit of the control unit 320 of the navigation device 300 described above, that is, the position identification unit 321, the guidance control unit 322, and the map information providing unit 323 are formed when the CPU 21 reads and executes a predetermined program. Therefore, the RAM 22 stores a program for realizing processing of each functional unit.

Each component described above is classified according to major processing content for ease of understanding of the configuration of the navigation device 300. Therefore, the present invention is not limited by the manner of classification of the components or the names of the components. The components of the navigation device 300 can be classified into a greater number of components according to processing content. It is possible to classify the components so that one component performs a greater number of processing operations.

Each functional unit may be formed not only by a CPU but also by other hardware (ASIC, GPU, or the like). Further, processing of each functional unit may be performed by one hardware unit or may be performed by a plurality of hardware units.

[Description of Operation] Next, an operation of notification information output processing performed by the in-vehicle device 100 will be described.

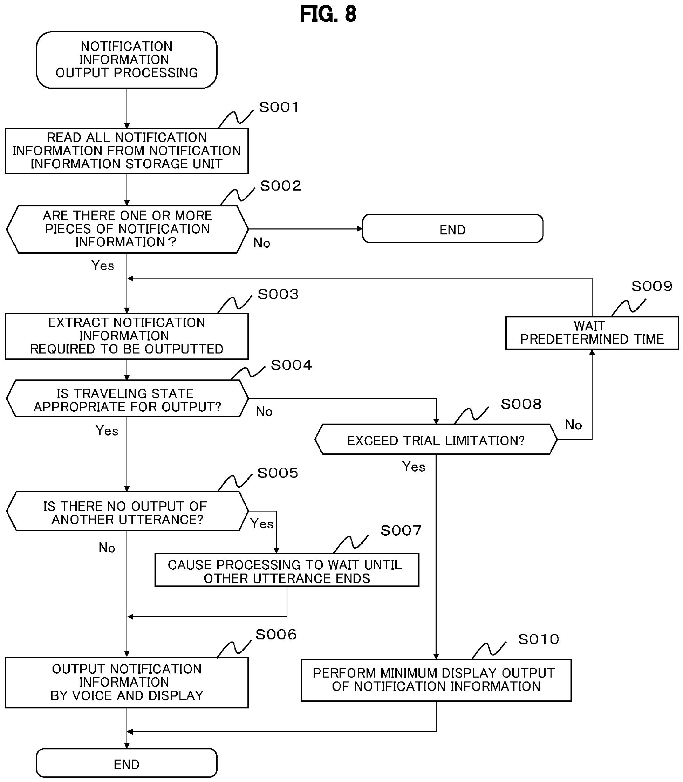

FIG. 8 is a diagram showing a flow of the notification information output processing. The notification information output processing is periodically started (for example, once in five minutes, once in a predetermined time longer than five minutes, or once in a predetermined time shorter than five minutes). It is assumed that the notification information acquisition unit 121 periodically or randomly issues a distribution request of notification information to the server device 200 and stores distributed information into the notification information storage unit 131.

The output necessity determination unit 122 reads all notification information from the notification information storage unit 131 of the in-vehicle device 100 (step S001).

Then, the output necessity determination unit 122 determines whether or not there are one or more pieces of notification information (step S002). When there is no notification information (in the case of "No" in step S002), the output necessity determination unit 122 ends the notification information output processing.

When there are one or more pieces of notification information (in the case of "Yes" in step S002), the output necessity determination unit 122 extracts notification information required to be outputted (step S003). Specifically, the output necessity determination unit 122 determines necessity of output of the notification information depending on whether or not the type of the notification information indicates that notification is meaningless because of existence of other notification information. This is determined by reading information of the output necessity determination target 133F of the trial limit setting storage unit 133 and referring to information of necessity corresponding to the notification information.

The traveling state evaluation unit 123 determines whether or not a traveling state is appropriate for output (step S004). Specific processing of the determination will be described later in detail in traveling state appropriateness determination processing.

When the traveling state is appropriate for output (in the case of "Yes" in step S004), the guidance interference determination unit 124 determines whether or not there is an output of another utterance (step S005). Specifically, the guidance interference determination unit 124 determines interference between a voice output of the notification information and another guidance voice. Te guidance interference determination unit 124 detects existence of a voice related to another guidance in a voice output.

When there is no output of another utterance (in the case of "No" in step S005), the voice output control unit 125 and the display output control unit 126 output the notification information by voice and display (step S006). Specifically, the voice output control unit 125 voice-outputs notification content included in the notification information by reading aloud the notification content by TTS and the display output control unit 126 displays the notification content for each piece of notification information by using, for example, a display widget such as a message box. Then, the voice output control unit 125 ends the notification information output processing.

When there is an output of another utterance (in the case of "Yes" in step S005), the guidance interference determination unit 124 causes processing to wait until the other utterance ends (step S007). After the waiting, the guidance interference determination unit 124 causes control to proceed to step S006. The guidance interference determination unit 124 may return the control to step S005 after waiting a predetermined time (for example, ten seconds) instead of causing the processing to wait until the other utterance ends.

When the traveling state is not appropriate for output (in the case of "No" in step S004), the output necessity determination unit 122 determines whether or not a trial limitation, which is a limitation of the time or the number of times that are predetermined for each type of the notification information, is reached (step S008). Specifically, the output necessity determination unit 122 determines whether or not the trial limitation (either one of the trial frequency limitation 133D and the trial time limitation 133E), which is the limitation of the time or the number of times that are predetermined for each type of the notification information, is reached regarding the number of times when determining whether or not the traveling state is appropriate for output or the time elapsed from when the determination whether or not the traveling state is appropriate for output is started, for each piece of notification information.

The output necessity determination unit 122 waits a predetermined time (step S009) for the notification information where the trial limitation is not reached ("No" in step S008) and causes the control to proceed to step S003.

The display output control unit 126 performs minimum display output of the notification information for the notification information where either one of the trial frequency limitation and the trial time limitation is reached ("Yes" in step S008) (step S010). The details of the minimum display output will be described later.

The flow of the notification information output processing has been described. According to the notification information output processing, it is possible to appropriately output the notification information without disturbing output of other information.

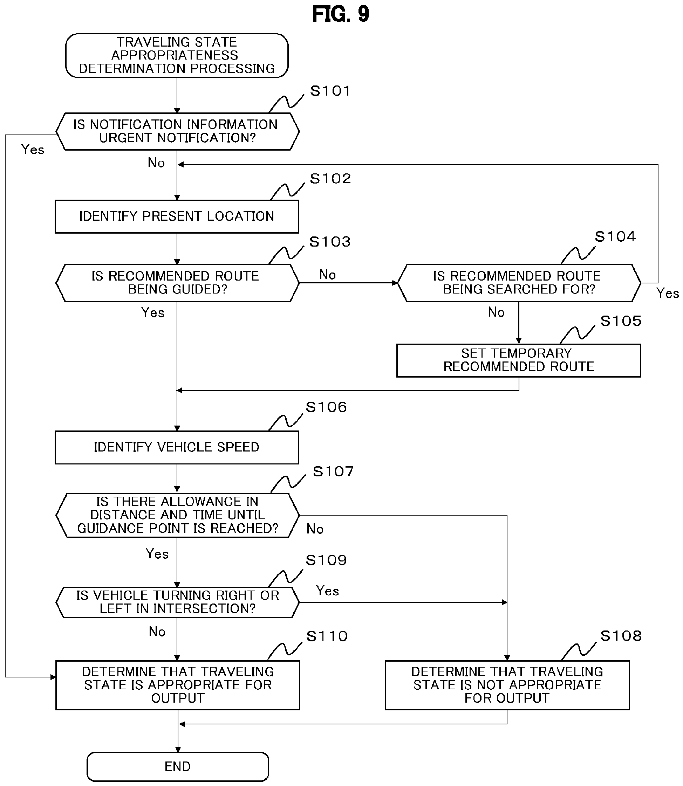

FIG. 9 is a diagram showing a flow of the traveling state appropriateness determination processing. The traveling state appropriateness determination processing is started for each piece of notification information in step S004 of the notification information output processing.

First, the traveling state evaluation unit 123 determines whether or not the notification information is an urgent notification (step S101). Specifically, when the type of information is "urgent", the traveling state evaluation unit 123 determines that the notification information is an urgent notification. For example, the traveling state evaluation unit 123 determines that occurrence information of natural disaster such as earthquake, tsunami, and tornado is an urgent notification. When the notification information is an urgent notification (in the case of "Yes" in step S101), the traveling state evaluation unit 123 causes the control to proceed to step S110 in which the notification information is determined to be appropriate to be outputted and ends the traveling state appropriateness determination processing.

When the notification information is not an urgent notification (in the case of "No" in step S101), the traveling state evaluation unit 123 identifies the present location (step S102). Specifically, the traveling state evaluation unit 123 acquires the position of the present location from the position identification unit 321 of the navigation device 300.

Then, the traveling state evaluation unit 123 determines whether or not the recommended route is being guided (step S103). Specifically, the traveling state evaluation unit 123 inquires of the navigation device 300 whether or not the recommended route is set and determines whether or not the recommended route is set.

When the recommended route is not being guided (in the case of "No" in step S103), the traveling state evaluation unit 123 determines whether or not the recommended route is being searched for (step S104). Specifically, the traveling state evaluation unit 123 inquires of the navigation device 300 whether or not the recommended route is being searched for and determines whether or not the recommended route is being searched for. When the recommended route is being searched for (in the case of "Yes" in step S104), the traveling state evaluation unit 123 returns the control to step S102.

When the recommended route is not being searched for (in the case of "No" in step S104), the traveling state evaluation unit 123 sets a temporary recommended route (step S105). Specifically, the traveling state evaluation unit 123 causes the navigation device 300 to set a temporary recommended route and a guidance event.

Then, the traveling state evaluation unit 123 identifies a vehicle speed (step S106). Specifically, the traveling state evaluation unit 123 acquires a vehicle speed detected by the vehicle speed sensor 7 of the navigation device 300 from the navigation device 300.

Then, the traveling state evaluation unit 123 determines whether or not there is an allowance in distance and time until the guidance point is reached (step S107). Specifically, the traveling state evaluation unit 123 refers to the notification start condition storage unit 132, identifies a row of the voice notification reproduction time 132A corresponding to a reproduction time of a voice of the notification information, and acquires the guidance point distance 132B and the guidance point time 132C in the identified row. Then, the traveling state evaluation unit 123 inquires of the navigation device 300 about distance and time to a nearest guidance point, and when the distance and the time correspond to the guidance point distance 132B and the guidance point time 132C, respectively, the traveling state evaluation unit 123 determines that there is the allowance. When either one of the distance and the time does not correspond to or both of the distance and the time do not correspond to, the traveling state evaluation unit 123 determines that there is no allowance. Available rows are different for each of the first operation mode and the second operation mode, so that the traveling state evaluation unit 123 specifies rows corresponding to the voice notification reproduction time 132A according to a predetermined current operation mode, and when there is no row corresponding to the voice notification reproduction time 132A, the traveling state evaluation unit 123 determines that there is the allowance.

In step S107, the traveling state evaluation unit 123 may weight values read from the guidance point distance 132B and the guidance point time 132C in a case of a driver who often uses hard braking by using information that identifies the frequency that a driver uses hard braking from a history of driving operation that is recorded separately by using a predetermined method. For example, the traveling state evaluation unit 123 may classify the frequency of using hard braking into a predetermined limited number of levels and calculate a product of the values of the guidance point distance 132B and the guidance point time 132C by using a coefficient predetermined according to the level.

When there is no allowance in distance and time until the guidance point is reached (in the case of "No" in step S107), the traveling state evaluation unit 123 determines that the notification information is determined to be not appropriate to be outputted (step S108). Then, the traveling state evaluation unit 123 ends the traveling state appropriateness determination processing.

When there is an allowance in distance and time until the guidance point is reached (in the case of "Yes" in step S107), the traveling state evaluation unit 123 determines whether or not the vehicle is turning right or left in an intersection (step S109). Specifically, the traveling state evaluation unit 123 inquires of the navigation device 300 whether or not the present location is in an intersection and the running direction of the vehicle is a right turn or a left turn. When the vehicle is turning right or left in an intersection (in the case of "Yes" in step S109), the traveling state evaluation unit 123 causes the control to proceed to step S108.

When the vehicle is not turning right or left in an intersection (in the case of "No" in step S109), the traveling state evaluation unit 123 determines that the traveling state is appropriate for output (step S110). Then, the traveling state evaluation unit 123 ends the traveling state appropriateness determination processing.

The flow of the traveling state appropriateness determination processing has been described. According to the traveling state appropriateness determination processing, it is possible to determine whether or not the traveling state is appropriate for voice output of the notification information.

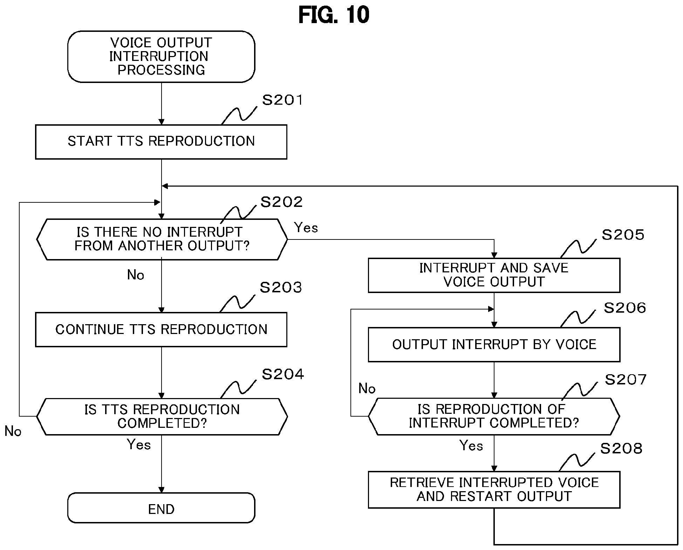

FIG. 10 is a diagram showing a flow of voice output interruption processing. The voice output interruption processing is voice output processing considering an interrupt output from another voice in processing that reproduces a voice in step S006 in the notification information output processing.

First, the voice output control unit 125 starts TTS reproduction (step S201). Then, the voice output control unit 125 determines whether there is no interrupt from another output (step S202). For example, when there is another output, that is, the navigation device 300 or an audio device not shown in the drawings, the voice output control unit 125 determines whether or not a voice output is started from another communicable device such as the audio device.

When there is no interrupt from another output (in the case of "No" in step S202), the voice output control unit 125 continues the TTS reproduction for a predetermined time (for example, one second) (step S203). Then, the voice output control unit 125 determines whether or not the TTS reproduction is completed (step S204). When the TTS reproduction is completed (in the case of "Yes" in step S204), the voice output control unit 125 ends the voice output interruption processing. When the TTS reproduction is not completed (in the case of "No" in step S204), the voice output control unit 125 returns the control to step S202.

When there is an interrupt from another output (in the case of "Yes" in step S202), the voice output control unit 125 interrupts the voice output and saves an output position (step S205).

Then, the voice output control unit 125 outputs the interrupt voice (step S206). Then, the voice output control unit 125 determines whether or not the reproduction of the interrupt voice is completed (step S207). When the reproduction of the interrupt voice is not completed (in the case of "No" in step S207), the voice output control unit 125 returns the control to step S206.

When the reproduction of the interrupt voice is completed (in the case of "Yes" in step S207), the voice output control unit 125 retrieves the voice whose output is interrupted and restarts the output from the saved output position or a position immediately before the saved output position (step S208). Then, the voice output control unit 125 returns the control to step S202.

The flow of the voice output interruption processing has been described. According to the voice output interruption processing, when there is a voice output of another interrupt from when the voice output of the notification information is started to when the voice output of the notification information is completed, it is possible to preferentially output the voice output of the other interrupt. Therefore, when the notification information is a long text to be read such as an e-mail, even if a situation occurs in which a sudden voice output is required (for example, a situation occurs in which a deviation from the recommended route is detected or a situation occurs in which the vehicle reaches a guidance start point of the recommended route by speed change and the like and an guidance event occurs), it is possible to appropriately output a voice.

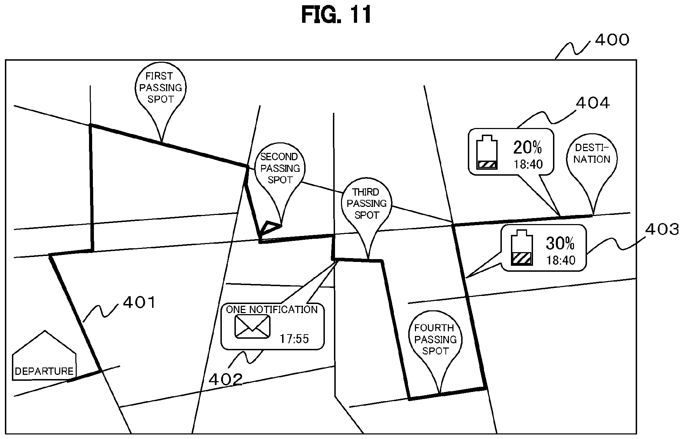

FIG. 11 is a diagram showing an example of a minimum display output screen 400. In the minimum display output screen 400, a route 401 where the vehicle actually travels is superimposed on a map and displayed. The display output control unit 126 identifies a spot on a map regarding the present location at the time when the notification information is acquired and displays a predetermined icon indicating acquisition of the notification information on the route 401. When the notification information is outputted by a normal method (when the processing of step S006 is performed) without using the minimum display output screen 400, the notification information is displayed on a display by using a message box that pops up for each piece of notification information and the notification information is read aloud by voice. On the other hand, it can be said that the minimum display output screen 400 is a screen that displays minimum information, that is, a fact that the notification information is received.

For example, when an e-mail addressed to a driver is received, a receipt notification 402 including an icon that indicates an e-mail reception notification and a time that specifies a reception time of the notification is shown by using a balloon display that identifiably displays a position where the e-mail is received. Alternatively, when a gasoline remaining amount warning (remaining amount is 30%) is received, a receipt notification 403 including an icon that indicates the remaining amount of 30%, information that specifies a reception time of the notification, and a numerical value that indicates the remaining amount is shown by using a balloon display that identifiably displays a position where the gasoline remaining amount warning is received. Similarly, if a gasoline remaining amount warning (remaining amount is 20%) is received thereafter, a receipt notification 404 is shown by using a balloon display.

However, it is not limited to this. For example, the icon of receipt notification may be displayed in animation. Specifically, for example, a route is superimposed on a travel time series and displayed, and when the tip of the route reaches a position where the receipt notification is made, the receipt notification may be displayed. By doing so, it is possible to display where and what notification is received while the vehicle is traveling in a more understandable form. Further, the receipt notification may be shown not only by the display but also by illumination, vibration, voice output, and the like.

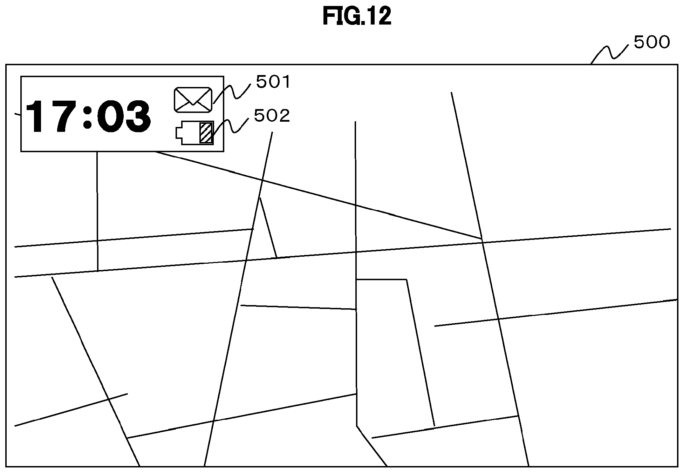

FIG. 12 is a diagram showing another example of a minimum display output screen 500. In the minimum display output screen 500, when the display output control unit 126 acquires the notification information, the display output control unit 126 notifies that there is the notification information by displaying a predetermined icon (for example, a mail reception notification icon 501 or a gasoline warning icon 502) according to a type of the notification information at a predetermined position (for example, in a time display area) on a screen. Further, the receipt notification may be shown not only by the display but also by illumination, vibration, voice output, and the like.

The in-vehicle system according to the first embodiment has been described. According to the first embodiment, it can be said that it is possible to appropriately notify the notification information.

However, the present invention is not limited to the embodiment described above. The first embodiment described above can be variously modified within the scope of technical idea of the present invention.

For example, in the first embodiment, the traveling state evaluation unit 123 determines whether or not the traveling state is appropriate for output by whether or not the vehicle is turning right or left in an intersection in step S109 of the traveling state appropriateness determination processing. However, it is not limited to this. The traveling state evaluation unit 123 may more finely determine the appropriateness of voice output. For example, the traveling state evaluation unit 123 may determine the appropriateness of voice output according to the shape of a road including the present location and the running direction.

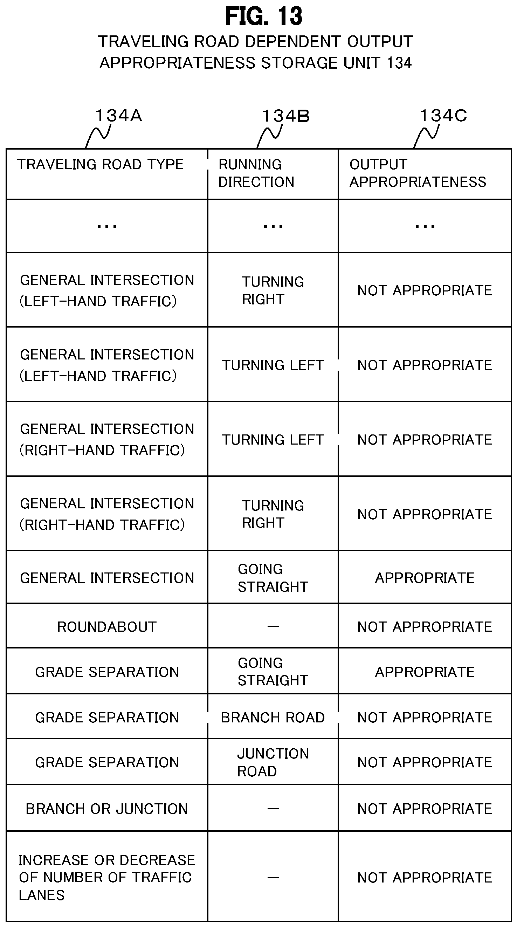

A second embodiment as mentioned above will be described with reference to FIG. 13. An in-vehicle system according to the second embodiment has substantially the same configuration as that of the first embodiment. However, the in-vehicle system of the second embodiment is partially different from that of the first embodiment. Therefore, the same configuration as that of the in-vehicle system according to the first embodiment will not be described and the difference will be mainly described.

FIG. 13 is a diagram showing a data structure of a traveling road dependent output appropriateness storage unit 134. The traveling road dependent output appropriateness storage unit 134 is stored in the storage unit 130 of the in-vehicle device 100 according to the second embodiment. The traveling road dependent output appropriateness storage unit 134 includes a traveling road type 134A, a running direction 134B, and an output appropriateness 134C. The traveling road type 134A is information that specifies a type or a shape of a road to which the present location belongs. For example, the type of the road to which the present location belongs includes a general intersection, a roundabout, a grade separation (for example, including a crossing-avoiding road that avoids a crossing with another road by differentiating the height of a road from that of the other road when the vehicle is running in a predetermined direction), a branch or junction, an increase or decrease of the number of traffic lanes, and the like. Further, among them, the general intersection includes a left-hand traffic and a right-hand traffic.

The running direction 134B is information that specifies a sort of running direction when there are some directions in which the vehicle runs on a road type specified by the traveling road type 134A. Regarding the sort of running direction, for example, in addition to turning right, turning left, and going straight, in the case of a grade separation, going straight, going in a direction toward a branch road (proceeding to a cross road after branching), and going in a direction toward a junction road (returning to the original road after branching) can be considered. The output appropriateness 134C is information that indicates appropriateness of voice output according to a combination of the traveling road type 134A and the running direction 134B.

The traveling state evaluation unit 123 determines output appropriateness according to a shape of a road including the present location and the running direction by referring to the traveling road dependent output appropriateness storage unit 134 in step S109. Specifically, for example, regarding a case of turning right or left in a general intersection where two roads cross each other at an intersection, the traveling state evaluation unit 123 determines that the case is not appropriate for voice output and determines a case of going straight is appropriate for voice output. Further, for example, the traveling state evaluation unit 123 determines that a case of a roundabout in which a plurality of roads join together and wander about is not appropriate for voice output. In addition, the traveling state evaluation unit 123 determines that a case of an increase or decrease of the number of traffic lanes, a branch, or a junction is not appropriate for voice output. Further, the traveling state evaluation unit 123 determines that a case of a grade separation where a plurality of roads three-dimensionally cross each other is appropriate for voice output according to a running direction.

The in-vehicle system according to the second embodiment has been described. By doing this, it can be said that it is possible to more finely determine the output appropriateness.

In the in-vehicle system according to the first embodiment, the traveling state evaluation unit 123 determines whether or not there is an allowance in distance and time until the guidance point is reached in step S107 of the traveling state appropriateness determination processing. However, it is not limited to this. The traveling state evaluation unit 123 may more finely determine the appropriateness of voice output. For example, the traveling state evaluation unit 123 may weight allowance of the distance and time according to a driving tendency such as the frequency of lane changes of a driver. In other words, when the driver has a tendency to frequently change traffic lanes, it is possible to determine the allowance of the distance and time by multiplying the distance and time until the guidance point is reached by a predetermined coefficient according to the frequency of traffic lane changes so that it is possible to appropriately determine the allowance of the distance and time. By doing this, it is possible to more safely output the notification information

The present invention has been described with reference to the embodiments. However, the present invention is not limited to this, and the characteristic processing operations described in the above embodiments can be applied to another device (for example, a mobile terminal such as a detachable smartphone or tablet device in addition to the in-vehicle device 100).

## Claims

1. An in-vehicle device comprising:
a notification information acquisition unit (121) configured to acquire notification information transmitted from an external device (200);
a traveling state evaluation unit (123) configured to identify a traveling state of a vehicle in which the in-vehicle device is mounted and to evaluate appropriateness of voice output of the notification information;
a guidance interference determination unit (124) configured to determine interference between a voice output of the notification information and another guidance voice when the traveling state evaluation unit (123) evaluates that the notification information is appropriate for voice output; and
a voice output control unit (125) configured to avoid the interference with the guidance voice and to perform voice output of the notification information when there is the interference with the guidance voice.

2. The in-vehicle device according to claim 1, further comprising:
an output necessity determination unit (122) configured to determine a necessity of output of the notification information depending on whether or not a type of the notification information indicates that notification is meaningless because of existence of other notification information.

3. The in-vehicle device according to claim 1, further comprising:
an output necessity determination unit (122) configured to determine that output is not necessary when a trial limitation that is predetermined for each type of the notification information is reached when the traveling state evaluation unit (123) evaluates that the notification information is not appropriate for voice output.

4. The in-vehicle device according to claim 1, wherein
the traveling state evaluation unit (123) is configured to determine that the notification information is appropriate for voice output when a notification start condition that is predetermined according to a length of voice output of the notification information is satisfied.

5. The in-vehicle device according to claim 1, wherein
the traveling state evaluation unit (123) is configured to determine that the notification information is appropriate for voice output when a notification start condition that is predetermined according to a length of voice output of the notification information is satisfied, wherein
the notification start condition is an allowance of distance and time from a present location to a nearest guidance point on a recommended route.

6. The in-vehicle device according to claim 5, wherein
when there is no setting of recommended route, the traveling state evaluation unit (123) determines the notification start condition by setting a temporary recommended route and using a guidance point on the temporary recommended route.

7. The in-vehicle device according to one of the preceding claims, wherein
the traveling state evaluation unit (123) is configured to determine an appropriateness of voice output according to a shape of a road including a present location and a running direction.

8. The in-vehicle device according to one of the preceding claims, further comprising:
a display output control unit (126) configured to identify a spot on a map regarding a present location at a time when the notification information is acquired and to display a predetermined icon indicating acquisition of the notification information.

9. An in-vehicle system comprising:
an in-vehicle device (100) according to one of claims 1 - 8; and
a navigation device (300),
wherein the navigation device (300) includes
a position identification unit (321) that identifies a present location, and
a guidance control unit (322) that performs guidance with voice by using the present location and a recommended route.

10. A notification information output method that outputs notification information by using an in-vehicle device (100), wherein
the in-vehicle device includes a notification information acquisition unit (121), a traveling state evaluation unit (123), a guidance interference determination unit (124), and a voice output control unit (125),
the notification information acquisition unit (121) performs a notification information acquisition step that acquires notification information transmitted from an external device,
the traveling state evaluation unit (123) performs a traveling state evaluation step that identifies a traveling state of a vehicle in which the in-vehicle device is mounted and evaluates appropriateness of voice output of the notification information,
the guidance interference determination unit (124) performs a guidance interference determination step that determines interference between a voice output of the notification information and another guidance voice when the traveling state evaluation step evaluates that the notification information is appropriate for voice output, and
the voice output control unit (125) performs a voice output control step that avoids the interference with the guidance voice and performs voice output of the notification information when there is the interference with the guidance voice.
